# EUROPEAN PATENT APPLICATION

(11) **EP 4 351 217 A1**
(43) Date of publication of application: **10.04.2024**
(21) Application number: 23201171.8
(22) Date of filing: 02.10.2023
(51) Int. Cl.: H04W 36/08, H04W 8/24

(54) **BEAM REFINEMENT DURING HANDOVER**

(30) Priority: 05.10.2022 GB 202214629
(71) Applicant: Nokia Technologies Oy, 02610 Espoo (FI)
(72) Inventor: GÜRSU, Halit Murat, 81379 Munich (DE); CAPORAL DEL BARRIO, Samantha, 9000 Aalborg (DK); AWADA, Ahmad, 81249 Munich (DE); VIERING, Ingo, 81549 Munich (DE); SPAPIS, Panagiotis, 81475 Munich (DE)
(74) Representative: Nokia EPO representatives

(57) **Abstract**

The disclosure relates to an apparatus comprising at least one processor and at least one memory including computer code for one or more programs, the at least one memory and the computer code configured, with the at least one processor, to cause the apparatus at least to: obtain (700) user equipment information indicating whether a user equipment served by the apparatus would need repetitions of a reference signal transmitted by a target base station to successfully select a receiving beam aligned with a transmitting beam in a beam management procedure with the target base station; and send (702), to the target base station, the user equipment information.

## Description

### Field of the disclosure

The present disclosure relates to an apparatus, a method, and a computer program for performing handover of a user equipment from a source base station to a target base station in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising means for: obtaining user equipment information indicating whether a user equipment served by the apparatus would need repetitions of a reference signal transmitted by a target base station to successfully select a receiving beam aligned with a transmitting beam in a beam management procedure with the target base station; and sending, to the target base station, the user equipment information.

The reference signal may be a channel state information reference signal.

The transmitting beam may be a narrow transmitting beam and may be quasi-collocated with a broad transmitting beam selected by the target base station in a first phase of the beam management procedure after the user equipment is handed over from the apparatus to the target base station.

The transmitting beam may be selected by the target base station in a second phase of the beam management procedure after the user equipment is handed over from the apparatus to the target base station.

The receiving beam may be selected by the user equipment in a third phase of the beam management procedure after the user equipment is handed over from the apparatus to the target base station.

The receiving beam may be generated by the equipment via a panel selected by the user equipment in the first phase of the beam management procedure after the apparatus is handed over from the apparatus to the target base station.

The repetitions of the reference signal may be transmitted by the target base station on the transmitting beam.

The user equipment information may indicate at least one of: the user equipment would need repetitions of the reference signal transmitted by the target base station to successfully select a receiving beam aligned with the transmitting beam; the number of repetitions of the reference signal transmitted by the target base station that the user equipment needs to successfully select a receiving beam aligned with the transmitting beam; the user equipment would not need repetitions of the reference signal transmitted by the target base station to successfully select a receiving beam aligned with the transmitting beam; or a confidence indicator to successfully select a receiving beam aligned with the transmitting beam without repetitions of the reference signal transmitted by the target base station.

The user equipment information is determined by the user equipment; and the apparatus may comprise means for: sending, to the user equipment, a user equipment information inquiry to obtain the user equipment information; and receiving, from the user equipment, a response to the user equipment information inquiry comprising the user equipment information.

The user equipment information may be determined by the user equipment based on a model received from the apparatus.

Inputs of the model may be determined by the user equipment.

The user equipment information may be determined by the apparatus.

The user equipment information may be determined by the apparatus based on a model.

Inputs of the model maybe determined by the apparatus; and inputs of the model may be received from the user equipment.

Inputs of the model may comprise at least one of: a location of the user equipment; a speed of the user equipment; a reference signal received power or reference signal received quality measured by the user equipment for a cell of the target base station; a reference signal received power or reference signal received quality measured by the source base station for a cell of the target base station.

An output of the model may comprise at least one of: a stationarity of a channel between the user equipment and the target base station; a non-stationarity of a channel between the user equipment and the target base station; an indication that the user equipment would need repetitions of the reference signal transmitted by the target base station; the number of repetitions of the reference signal transmitted by the target base station; a confidence indicator to successfully select a receiving beam aligned with the transmitting beam without repetitions of the reference signal transmitted by the target base station; or an indication that the user equipment would not need repetitions of the reference signal transmitted by the target base station.

The user equipment information may be sent to the target base station in a handover request message.

The user equipment information may be conveyed in a user equipment context.

The user equipment information may be conveyed in a user equipment capability information element.

According to an aspect there is provided an apparatus comprising at least one processor and at least one memory including computer code for one or more programs, the at least one memory and the computer code configured, with the at least one processor, to cause the apparatus at least to: obtain user equipment information indicating whether a user equipment served by the apparatus would need repetitions of a reference signal transmitted by a target base station to successfully select a receiving beam aligned with a transmitting beam in a beam management procedure with the target base station; and send, to the target base station, the user equipment information.

The reference signal may be a channel state information reference signal.

The transmitting beam may be a narrow transmitting beam and may be quasi-collocated with a broad transmitting beam selected by the target base station in a first phase of the beam management procedure after the user equipment is handed over from the apparatus to the target base station.

The transmitting beam may be selected by the target base station in a second phase of the beam management procedure after the user equipment is handed over from the apparatus to the target base station.

The receiving beam may be selected by the user equipment in a third phase of the beam management procedure after the user equipment is handed over from the apparatus to the target base station.

The receiving beam may be generated by the equipment via a panel selected by the user equipment in the first phase of the beam management procedure after the apparatus is handed over from the apparatus to the target base station.

The repetitions of the reference signal may be transmitted by the target base station on the transmitting beam.

The user equipment information may indicate at least one of: the user equipment would need repetitions of the reference signal transmitted by the target base station to successfully select a receiving beam aligned with the transmitting beam; the number of repetitions of the reference signal transmitted by the target base station that the user equipment needs to successfully select a receiving beam aligned with the transmitting beam; the user equipment would not need repetitions of the reference signal transmitted by the target base station to successfully select a receiving beam aligned with the transmitting beam; or a confidence indicator to successfully select a receiving beam aligned with the transmitting beam without repetitions of the reference signal transmitted by the target base station.

The user equipment information is determined by the user equipment; and the at least one memory and the computer code may be configured, with the at least one processor, to cause the apparatus at least to: send, to the user equipment, a user equipment information inquiry to obtain the user equipment information; and receive, from the user equipment, a response to the user equipment information inquiry comprising the user equipment information.

The user equipment information may be determined by the user equipment based on a model received from the apparatus.

Inputs of the model may be determined by the user equipment.

The user equipment information may be determined by the apparatus.

The user equipment information may be determined by the apparatus based on a model.

Inputs of the model maybe determined by the apparatus; and inputs of the model may be received from the user equipment.

Inputs of the model may comprise at least one of: a location of the user equipment; a speed of the user equipment; a reference signal received power or reference signal received quality measured by the user equipment for a cell of the target base station; a reference signal received power or reference signal received quality measured by the source base station for a cell of the target base station.

An output of the model may comprise at least one of: a stationarity of a channel between the user equipment and the target base station; a non-stationarity of a channel between the user equipment and the target base station; an indication that the user equipment would need repetitions of the reference signal transmitted by the target base station; the number of repetitions of the reference signal transmitted by the target base station; a confidence indicator to successfully select a receiving beam aligned with the transmitting beam without repetitions of the reference signal transmitted by the target base station; or an indication that the user equipment would not need repetitions of the reference signal transmitted by the target base station.

The user equipment information may be sent to the target base station in a handover request message.

The user equipment information may be conveyed in a user equipment context.

The user equipment information may be conveyed in a user equipment capability information element.

According to an aspect there is provided an apparatus comprising circuitry configured to: obtain user equipment information indicating whether a user equipment served by the apparatus would need repetitions of a reference signal transmitted by a target base station to successfully select a receiving beam aligned with a transmitting beam in a beam management procedure with the target base station; and send, to the target base station, the user equipment information.

The reference signal may be a channel state information reference signal.

The transmitting beam may be a narrow transmitting beam and may be quasi-collocated with a broad transmitting beam selected by the target base station in a first phase of the beam management procedure after the user equipment is handed over from the apparatus to the target base station.

The transmitting beam may be selected by the target base station in a second phase of the beam management procedure after the user equipment is handed over from the apparatus to the target base station.

The receiving beam may be selected by the user equipment in a third phase of the beam management procedure after the user equipment is handed over from the apparatus to the target base station.

The receiving beam may be generated by the equipment via a panel selected by the user equipment in the first phase of the beam management procedure after the apparatus is handed over from the apparatus to the target base station.

The repetitions of the reference signal may be transmitted by the target base station on the transmitting beam.

The user equipment information may indicate at least one of: the user equipment would need repetitions of the reference signal transmitted by the target base station to successfully select a receiving beam aligned with the transmitting beam; the number of repetitions of the reference signal transmitted by the target base station that the user equipment needs to successfully select a receiving beam aligned with the transmitting beam; the user equipment would not need repetitions of the reference signal transmitted by the target base station to successfully select a receiving beam aligned with the transmitting beam; or a confidence indicator to successfully select a receiving beam aligned with the transmitting beam without repetitions of the reference signal transmitted by the target base station.

The user equipment information is determined by the user equipment; and the apparatus may comprise circuitry configured to: send, to the user equipment, a user equipment information inquiry to obtain the user equipment information; and receive, from the user equipment, a response to the user equipment information inquiry comprising the user equipment information.

The user equipment information may be determined by the user equipment based on a model received from the apparatus.

Inputs of the model may be determined by the user equipment.

The user equipment information may be determined by the apparatus.

The user equipment information may be determined by the apparatus based on a model.

Inputs of the model maybe determined by the apparatus; and inputs of the model may be received from the user equipment.

Inputs of the model may comprise at least one of: a location of the user equipment; a speed of the user equipment; a reference signal received power or reference signal received quality measured by the user equipment for a cell of the target base station; a reference signal received power or reference signal received quality measured by the source base station for a cell of the target base station.

An output of the model may comprise at least one of: a stationarity of a channel between the user equipment and the target base station; a non-stationarity of a channel between the user equipment and the target base station; an indication that the user equipment would need repetitions of the reference signal transmitted by the target base station; the number of repetitions of the reference signal transmitted by the target base station; a confidence indicator to successfully select a receiving beam aligned with the transmitting beam without repetitions of the reference signal transmitted by the target base station; or an indication that the user equipment would not need repetitions of the reference signal transmitted by the target base station.

The user equipment information may be sent to the target base station in a handover request message.

The user equipment information may be conveyed in a user equipment context.

The user equipment information may be conveyed in a user equipment capability information element.

According to an aspect there is provided a method comprising: obtaining user equipment information indicating whether a user equipment served by the apparatus would need repetitions of a reference signal transmitted by a target base station to successfully select a receiving beam aligned with a transmitting beam in a beam management procedure with the target base station; and sending, to the target base station, the user equipment information.

The reference signal may be a channel state information reference signal.

The transmitting beam may be a narrow transmitting beam and may be quasi-collocated with a broad transmitting beam selected by the target base station in a first phase of the beam management procedure after the user equipment is handed over from the apparatus to the target base station.

The transmitting beam may be selected by the target base station in a second phase of the beam management procedure after the user equipment is handed over from the apparatus to the target base station.

The receiving beam may be selected by the user equipment in a third phase of the beam management procedure after the user equipment is handed over from the apparatus to the target base station.

The receiving beam may be generated by the equipment via a panel selected by the user equipment in the first phase of the beam management procedure after the apparatus is handed over from the apparatus to the target base station.

The repetitions of the reference signal may be transmitted by the target base station on the transmitting beam.

The user equipment information may indicate at least one of: the user equipment would need repetitions of the reference signal transmitted by the target base station to successfully select a receiving beam aligned with the transmitting beam; the number of repetitions of the reference signal transmitted by the target base station that the user equipment needs to successfully select a receiving beam aligned with the transmitting beam; the user equipment would not need repetitions of the reference signal transmitted by the target base station to successfully select a receiving beam aligned with the transmitting beam; or a confidence indicator to successfully select a receiving beam aligned with the transmitting beam without repetitions of the reference signal transmitted by the target base station.

The user equipment information is determined by the user equipment; and the method may comprise: sending, to the user equipment, a user equipment information inquiry to obtain the user equipment information; and receiving, from the user equipment, a response to the user equipment information inquiry comprising the user equipment information.

The user equipment information may be determined by the user equipment based on a model received from the apparatus.

Inputs of the model may be determined by the user equipment.

The user equipment information may be determined by the apparatus.

The user equipment information may be determined by the apparatus based on a model.

Inputs of the model maybe determined by the apparatus; and inputs of the model may be received from the user equipment.

Inputs of the model may comprise at least one of: a location of the user equipment; a speed of the user equipment; a reference signal received power or reference signal received quality measured by the user equipment for a cell of the target base station; a reference signal received power or reference signal received quality measured by the source base station for a cell of the target base station.

An output of the model may comprise at least one of: a stationarity of a channel between the user equipment and the target base station; a non-stationarity of a channel between the user equipment and the target base station; an indication that the user equipment would need repetitions of the reference signal transmitted by the target base station; the number of repetitions of the reference signal transmitted by the target base station; a confidence indicator to successfully select a receiving beam aligned with the transmitting beam without repetitions of the reference signal transmitted by the target base station; or an indication that the user equipment would not need repetitions of the reference signal transmitted by the target base station.

The user equipment information may be sent to the target base station in a handover request message.

The user equipment information may be conveyed in a user equipment context.

The user equipment information may be conveyed in a user equipment capability information element.

According to an aspect there is provided a computer program comprising computer executable code which when run on at least one processor is configured to: obtain user equipment information indicating whether a user equipment served by an apparatus would need repetitions of a reference signal transmitted by a target base station to successfully select a receiving beam aligned with a transmitting beam in a beam management procedure with the target base station; and send, to the target base station, the user equipment information.

The reference signal may be a channel state information reference signal.

The transmitting beam may be a narrow transmitting beam and may be quasi-collocated with a broad transmitting beam selected by the target base station in a first phase of the beam management procedure after the user equipment is handed over from the apparatus to the target base station.

The transmitting beam may be selected by the target base station in a second phase of the beam management procedure after the user equipment is handed over from the apparatus to the target base station.

The receiving beam may be selected by the user equipment in a third phase of the beam management procedure after the user equipment is handed over from the apparatus to the target base station.

The receiving beam may be generated by the equipment via a panel selected by the user equipment in the first phase of the beam management procedure after the apparatus is handed over from the apparatus to the target base station.

The repetitions of the reference signal may be transmitted by the target base station on the transmitting beam.

The user equipment information may indicate at least one of: the user equipment would need repetitions of the reference signal transmitted by the target base station to successfully select a receiving beam aligned with the transmitting beam; the number of repetitions of the reference signal transmitted by the target base station that the user equipment needs to successfully select a receiving beam aligned with the transmitting beam; the user equipment would not need repetitions of the reference signal transmitted by the target base station to successfully select a receiving beam aligned with the transmitting beam; or a confidence indicator to successfully select a receiving beam aligned with the transmitting beam without repetitions of the reference signal transmitted by the target base station.

The user equipment information is determined by the user equipment; and the computer program may comprise computer executable code which when run on at least one processor is configured to: send, to the user equipment, a user equipment information inquiry to obtain the user equipment information; and receive, from the user equipment, a response to the user equipment information inquiry comprising the user equipment information.

The user equipment information may be determined by the user equipment based on a model received from the apparatus.

Inputs of the model may be determined by the user equipment.

The user equipment information may be determined by the apparatus.

The user equipment information may be determined by the apparatus based on a model.

Inputs of the model maybe determined by the apparatus; and inputs of the model may be received from the user equipment.

Inputs of the model may comprise at least one of: a location of the user equipment; a speed of the user equipment; a reference signal received power or reference signal received quality measured by the user equipment for a cell of the target base station; a reference signal received power or reference signal received quality measured by the source base station for a cell of the target base station.

An output of the model may comprise at least one of: a stationarity of a channel between the user equipment and the target base station; a non-stationarity of a channel between the user equipment and the target base station; an indication that the user equipment would need repetitions of the reference signal transmitted by the target base station; or an indication that the user equipment would not need repetitions of the reference signal transmitted by the target base station.

The user equipment information may be sent to the target base station in a handover request message.

The user equipment information may be conveyed in a user equipment context.

The user equipment information may be conveyed in a user equipment capability information element.

According to an aspect there is provided an apparatus comprising means for: receiving, from a source base station, user equipment information indicating whether a user equipment served by the source base station would need repetitions of a reference signal transmitted by the apparatus to successfully select a receiving beam aligned with a transmitting beam in a beam management procedure with the apparatus; and using the user equipment information to make a handover decision.

Making a handover decision may comprise at least one of: allowing handover from the source base station to the apparatus for all protocol data unit sessions; rejecting handover from the source base station to the apparatus for all protocol data unit sessions; calculating an overhead incurred by the repetitions of the reference signal transmitted by the apparatus to the resource usage of the apparatus; or accepting handover from the source base station to the apparatus for at least one protocol data unit session and rejecting handover from the source base station to the apparatus for at least one other protocol data unit session.

The apparatus may comprise means for: using the user equipment information to determine the timing of the repetitions of the reference signal transmitted by the apparatus on the transmitting beam.

According to an aspect there is provided an apparatus comprising at least one processor and at least one memory including computer code for one or more programs, the at least one memory and the computer code configured, with the at least one processor, to cause the apparatus at least to: receive, from a source base station, user equipment information indicating whether a user equipment served by the source base station would need repetitions of a reference signal transmitted by the apparatus to successfully select a receiving beam aligned with a transmitting beam in a beam management procedure with the apparatus; and use the user equipment information to make a handover decision.

Making a handover decision may comprise at least one of: allowing handover from the source base station to the apparatus for all protocol data unit sessions; rejecting handover from the source base station to the apparatus for all protocol data unit sessions; calculating an overhead incurred by the repetitions of the reference signal transmitted by the apparatus to the resource usage of the apparatus; or accepting handover from the source base station to the apparatus for at least one protocol data unit session and rejecting handover from the source base station to the apparatus for at least one other protocol data unit session.

The at least one memory and the computer code may be configured, with the at least one processor, to cause the apparatus at least to: use the user equipment information to determine the timing of the repetitions of the reference signal transmitted by the apparatus on the transmitting beam.

According to an aspect there is provided an apparatus comprising circuitry configured to: receive, from a source base station, user equipment information indicating whether a user equipment served by the source base station would need repetitions of a reference signal transmitted by the apparatus to successfully select a receiving beam aligned with a transmitting beam in a beam management procedure with the apparatus; and use the user equipment information to make a handover decision.

Making a handover decision may comprise at least one of: allowing handover from the source base station to the apparatus for all protocol data unit sessions; rejecting handover from the source base station to the apparatus for all protocol data unit sessions; calculating an overhead incurred by the repetitions of the reference signal transmitted by the apparatus to the resource usage of the apparatus; or accepting handover from the source base station to the apparatus for at least one protocol data unit session and rejecting handover from the source base station to the apparatus for at least one other protocol data unit session.

The apparatus may comprise circuitry configured to: use the user equipment information to determine the timing of the repetitions of the reference signal transmitted by the apparatus on the transmitting beam.

According to an aspect there is provided a method comprising:
receiving, from a source base station, user equipment information indicating whether a user equipment served by the source base station would need repetitions of a reference signal transmitted by an apparatus to successfully select a receiving beam aligned with a transmitting beam in a beam management procedure with the apparatus; and using the user equipment information to make a handover decision.

Making a handover decision may comprise at least one of: allowing handover from the source base station to the apparatus for all protocol data unit sessions; rejecting handover from the source base station to the apparatus for all protocol data unit sessions; calculating an overhead incurred by the repetitions of the reference signal transmitted by the apparatus to the resource usage of the apparatus; or accepting handover from the source base station to the apparatus for at least one protocol data unit session and rejecting handover from the source base station to the apparatus for at least one other protocol data unit session.

The method may comprise: using the user equipment information to determine the timing of the repetitions of the reference signal transmitted by the apparatus on the transmitting beam.

According to an aspect there is provided a computer program comprising computer executable code which when run on at least one processor is configured to: receive, from a source base station, user equipment information indicating whether a user equipment served by the source base station would need repetitions of a reference signal transmitted by an apparatus to successfully select a receiving beam aligned with a transmitting beam in a beam management procedure with the apparatus; and use the user equipment information to make a handover decision.

Making a handover decision may comprise at least one of: allowing handover from the source base station to the apparatus for all protocol data unit sessions; rejecting handover from the source base station to the apparatus for all protocol data unit sessions; calculating an overhead incurred by the repetitions of the reference signal transmitted by the apparatus to the resource usage of the apparatus; or accepting handover from the source base station to the apparatus for at least one protocol data unit session and rejecting handover from the source base station to the apparatus for at least one other protocol data unit session.

The computer program may comprise computer executable code which when run on at least one processor is configured to: use the user equipment information to determine the timing of the repetitions of the reference signal transmitted by the apparatus on the transmitting beam.

According to an aspect there is provided an apparatus comprising means for: receiving, from a source base station, a user equipment information inquiry to obtain user equipment information indicating whether the apparatus served by the source base station would need repetitions of a reference signal transmitted by a target base station to successfully select a receiving beam aligned with a transmitting beam in a beam management procedure with the target base station; and sending, to the source base station, a response to the user equipment information inquiry comprising the user equipment information determined by the user equipment or inputs to allow the source base station to determine the user equipment information.

The apparatus may comprise means for: sending, to the source base station, a measurement report comprising updated user equipment information determined by the user equipment or updated inputs to allow the source base station to determine updated user equipment information.

According to an aspect there is provided an apparatus comprising at least one processor and at least one memory including computer code for one or more programs, the at least one memory and the computer code configured, with the at least one processor, to cause the apparatus at least to: receive, from a source base station, a user equipment information inquiry to obtain user equipment information indicating whether the apparatus served by the source base station would need repetitions of a reference signal transmitted by a target base station to successfully select a receiving beam aligned with a transmitting beam in a beam management procedure with the target base station; and send, to the source base station, a response to the user equipment information inquiry comprising the user equipment information determined by the user equipment or inputs to allow the source base station to determine the user equipment information.

The apparatus may comprise circuitry configured to: send, to the source base station, a measurement report comprising updated user equipment information determined by the user equipment or updated inputs to allow the source base station to determine updated user equipment information.

According to an aspect there is provided an apparatus comprising circuitry configured to: receive, from a source base station, a user equipment information inquiry to obtain user equipment information indicating whether the apparatus served by the source base station would need repetitions of a reference signal transmitted by a target base station to successfully select a receiving beam aligned with a transmitting beam in a beam management procedure with the target base station; and send, to the source base station, a response to the user equipment information inquiry comprising the user equipment information determined by the user equipment or inputs to allow the source base station to determine the user equipment information.

The at least one memory and the computer code may be configured, with the at least one processor, to cause the apparatus at least to: send, to the source base station, a measurement report comprising updated user equipment information determined by the user equipment or updated inputs to allow the source base station to determine updated user equipment information.

According to an aspect there is provided a method comprising: receiving, from a source base station, a user equipment information inquiry to obtain user equipment information indicating whether an apparatus served by the source base station would need repetitions of a reference signal transmitted by a target base station to successfully select a receiving beam aligned with a transmitting beam in a beam management procedure with the target base station; and sending, to the source base station, a response to the user equipment information inquiry comprising the user equipment information determined by the user equipment or inputs to allow the source base station to determine the user equipment information.

The method may comprise: sending, to the source base station, a measurement report comprising updated user equipment information determined by the user equipment or updated inputs to allow the source base station to determine updated user equipment information.

According to an aspect there is provided a computer program comprising computer executable code which when run on at least one processor is configured to: receive, from a source base station, a user equipment information inquiry to obtain user equipment information indicating whether the apparatus served by the source base station would need repetitions of a reference signal transmitted by a target base station to successfully select a receiving beam aligned with a transmitting beam in a beam management procedure with the target base station; and send, to the source base station, a response to the user equipment information inquiry comprising the user equipment information determined by the user equipment or inputs to allow the source base station to determine the user equipment information.

The computer program may comprise computer executable code which when run on at least one processor is configured to: send, to the source base station, a measurement report comprising updated user equipment information determined by the user equipment or updated inputs to allow the source base station to determine updated user equipment information.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- Al:: Artificial Intelligence
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HO:: Handover
- HSS:: Home Subscriber Server
- IE:: Information Element
- loT:: Internet of Things
- LTE:: Long Term Evolution
- MAC:: Medium Access Control
- ML :: Machine Learning
- MS:: Mobile Station
- MTC:: Machine Type Communication
- NEF:: Network Exposure Function
- NF:: Network Function
- NR:: New radio
- NRF:: Network Repository Function
- NZP:: Non-Zero Power
- PDU:: Packet Data Unit
- PLMN:: Public Land Mobile Network
- PRACH:: Physical Random Access Channel
- QoS:: Quality of Service
- RAM:: Random Access Memory
- (R)AN:: (Radio) Access Network
- RB :: Resource Block
- RCI:: Radio Configuration Identifier
- ROM:: Read Only Memory
- RRC:: Radio Resource Control
- RRM:: Radio Resource Management
- RX:: Receiving/Reception/ Receive
- SMF:: Session Management Function
- SSB:: Synchronization Signal Block
- TF:: Type Field
- TR:: Technical Report
- TRP:: Transmission Reception Point
- TS:: Technical Specification
- TX:: Transmitting/Transmission/ Transmit
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a structure of a user equipment radio capability identifier as per Figure 29.2-1 of 3GPP TS 23.003;
Figure 5 shows a schematic representation of a first phase, a second phase and a third phase of a beam management procedure;
Figure 6 shows a signaling diagram of a process for performing handover of a user equipment from a source base station to a target base station in a communication system;
Figure 7 shows a block diagram of a method for performing a handover of a user equipment from a source base station to a target base station in a communication system performed by the source base station;
Figure 8 shows a block diagram of a method for performing a handover of a user equipment from a source base station to a target base station in a communication system performed by the target base station;
Figure 9 shows a block diagram of a method for performing a handover of a user equipment from a source base station to a target base station in a communication system performed by the user equipment; and
Figure 10 shows a schematic representation of a non-volatile memory medium storing instructions which when executed by a processor allow a processor to perform one or more of the steps of the methods of any of Figures 7 to 9.

### Detailed Description of the Figures

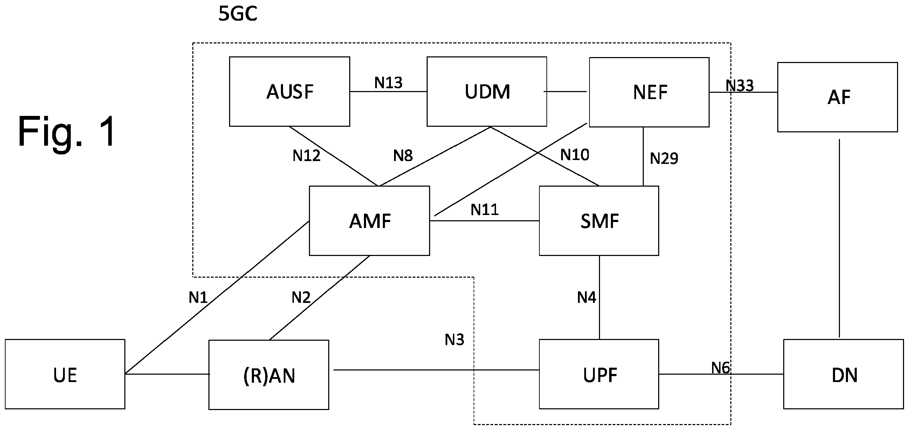

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

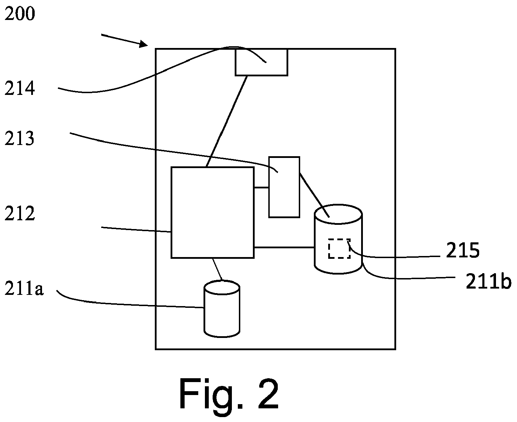

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

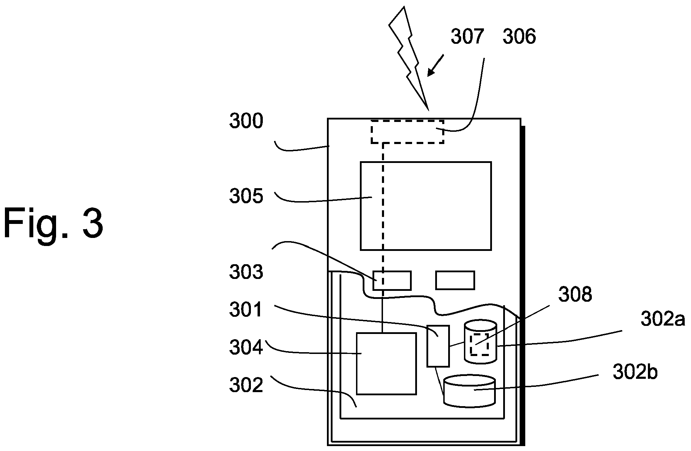

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to performing handover (HO) of a UE from a source BS to a target BS in a communication system.

As channel conditions of a radio resource control (RRC) connected UE change in a communication system, a source BS serving the UE may determine that the UE should be HO from the source BS to a target BS. The source BS may send a HO request to the target BS. The target BS may perform admission control and may accept or reject the HO request. The source BS may receive the HO response from the target approving the HO. The source BS may HO the UE from the source BS to the target BS.

According to section 9.1.1 of 3GPP TS 38.423, the HO request may comprise information elements (IEs) including a UE radio capability ID IE.

According to section 9.2.3.138 of 3GPP TS 38.423, the UE radio capability ID IE may comprise a UE radio capability ID as defined in 3GPP TS 23.003.

| **IE/Group Name** | **Presen ce** | **Range** | **IE type and reference** | **Semantics description** |
|---|---|---|---|---|
| UE Radio Capability ID | M | | OCTET STRING | |

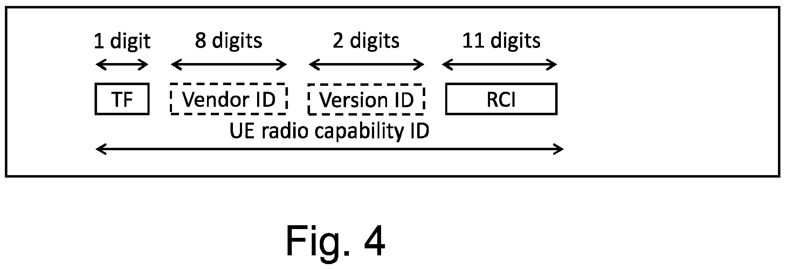

According to section 29.2 of 3GPP TS 23.003 the UE radio capability ID may be an identifier used to represent a set of UE radio capabilities defined in 3GPP TS 23.501 and in 3GPP TS 23.401. The UE radio capability ID may be composed of the following elements as shown in figure 29.2-1 (see Figure 4). Each element may consist of hexadecimal digits only.

The type field (TF) may identify the type of UE radio capability ID. The following values may be defined:
- 0: manufacturer-assigned UE radio capability ID;
- 1: network-assigned UE radio capability ID; and
- 2 to F: spare values for future use.

The vendor ID may be an identifier of the UE manufacturer. This may be defined by a value of private enterprise number issued by an internet assigned numbers authority in its capacity as the private enterprise number administrator, as maintained at https://www.iana.org/assignments/enterprise-numbers/enterprise-numbers. Its length may be 8 hexadecimal digits. This field may be present only if the Type Field is set to 0.

The version ID may be the current version ID configured in a UE radio capability management function. This field may be present only if the TF is set to 1. Its length may be two hexadecimal digits.

The Radio Configuration Identifier (RCI) may identify the UE radio configuration. Its length may be eleven hexadecimal digits.

According to section 5.9.10 of 3GPP TS 23.501 the UE radio capability ID may be a short pointer with format defined in 3GPP TS 23.003 that is used to uniquely identify a set of UE radio capabilities (i.e. UE radio capability information). The UE radio capability ID may be assigned either by a serving PLMN or by a UE manufacturer, as follows:
- UE manufacturer-assigned: The UE radio capability ID may be assigned by the UE manufacturer in which case it includes a UE manufacturer identification (i.e. a vendor ID). In this case, the UE radio capability ID may uniquely identify a set of UE radio capabilities for a UE by this manufacturer in any PLMN.
- PLMN-assigned: If a UE manufacturer-assigned UE radio capability ID is not used by the UE or the serving network, or it is not recognised by the serving PLMN UE radio capability management function, the UE radio capability management function may allocate UE radio capability IDs for the UE corresponding to each different set of UE radio capabilities the PLMN may receive from the UE at different times. In this case, the UE radio capability IDs the UE receives may be applicable to the serving PLMN and may uniquely identify the corresponding sets of UE radio capabilities in this PLMN. The PLMN assigned UE Radio Capability ID may include a Version ID in its format. The value of the Version ID may be the one configured in the UE radio capability management function, at time the UE radio capability ID value is assigned. The Version ID value may make it possible to detect whether a UE radio capability ID is current or outdated.

According to section 5.4.4.1 of 3GPP TS 23.501 this clause may apply when no radio capability signalling optimisation is used between a UE and the network. The UE radio capability information may contain information on radio access technologies that the UE supports (e.g. power class, frequency bands, etc).

According to section 6.2.2 of 3GPP TS 38.331 the UECapabilitylnformation IE message is used to transfer UE radio access capabilities requested by the network.
Signalling radio bearer: SRB1
RLC-SAP: AM
Logical channel: DCCH

### UECapabilityInformation message

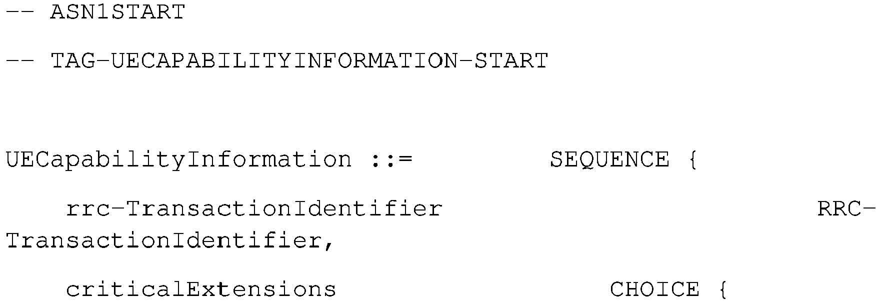

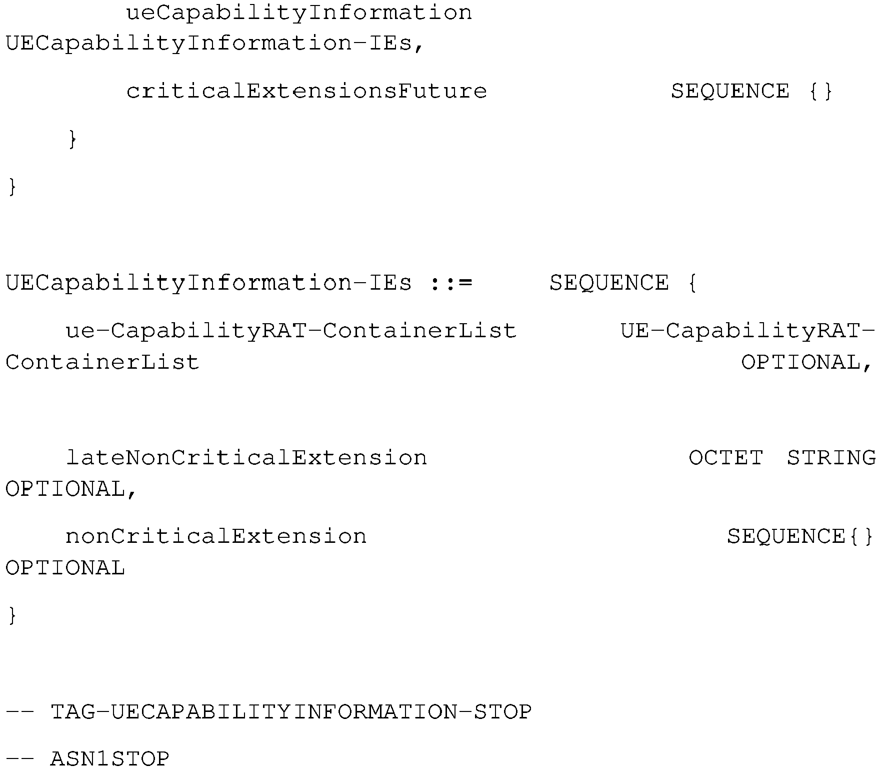

The UE capability information and PDU session to be setup list is considered during admission control to accept the HO request or reject it.

Admission control may fall under the responsibility of radio resource management (RRM). RRM may be a mechanism performed by the target BS to determine if the target BS can serve the UE and fulfil quality of service (QoS) requirements of the PDU sessions/bearers/flows.

Decision of admission control may depend on an amount of resources that is available to the target BS and/or an amount of resources that need to be allocated to the UE depending on the required QoS (e.g. may depend on the radio link quality between the UE and target BS which can be obtained through measurement reports that are forwarded by the source BS to the target BS).

A downlink (DL) beam management procedure is a procedure to align a transmitting (TX) beam of a BS with a receiving (RX) beam of a UE. The DL beam management procedure may comprise three phases: a first phase (P1), a second phase (P2) and a third phase (P3).

P1 may be used to enable UE measurement on different TX beams of a BS to support selection of TX beam(s) of the BS and/or a RX beam(s) of the UE. Assuming beamforming at the BS and at the UE, it may include an intra/inter TX beam sweep from a set of different TX beams and a RX beam sweep from a set of different RX beams.

P2 may be used to enable UE measurement on different TX beam(s) to support reselection of TX beam(s). It may include an intra/inter TX beam sweep from a set of different TX beams and a RX beam sweep from a set of different RX beams. The set of different TX beams may comprise the TX beam(s) selected in P1 and the set of different RX beams may comprise the RX beam(s) selected in P1. That is, P2 may be a special case of P1. Alternatively, the set of different TX beam may comprise narrow TX beams quasi-collocated with the TX beam selected in P1 and the set of different RX beams may comprise the RX beam(s) selected in P1.

P3 is used to enable UE measurement on the re-selected TX beam to support reselection of RX beam(s). It may include a RX beam sweep from a set of different RX beams. The set of different RX beam may comprise narrow RX beams quasi-collocated with the RX beam selected in P1.

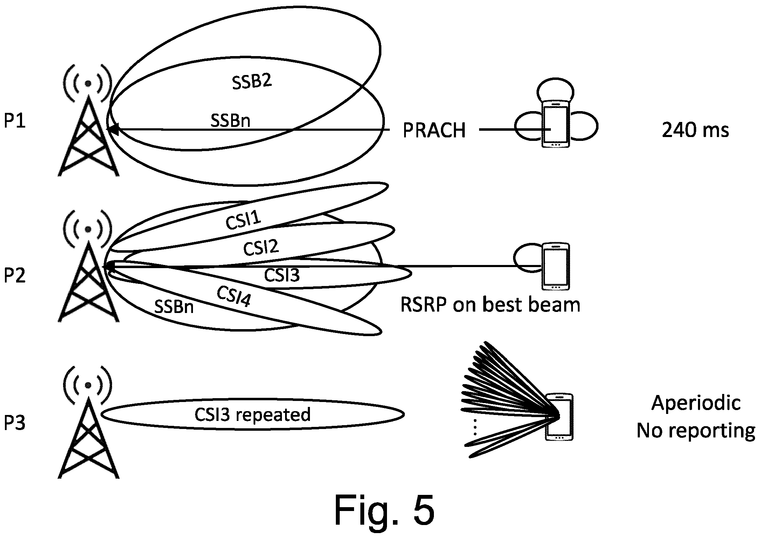

Figure 5 shows a schematic representation of P1, P2 and P3 of a beam management procedure performed by a BS and a UE. The BS may perform beamforming. The UE may perform beamforming. The UE may operate in frequency range 2 (FR2). The UE may be equipped with multiple panels. The UE may generate a broad RX beam via each panel. The UE may generate multiple narrow RX beams via each panel.

In P1 the BS may perform a broad TX beam sweep from a set of broad TX beams. Each broad TX beam may be associated with a respective synchronization signal block (SSB). The SSBs may be sent sequentially in a SSB burst. The UE may perform a broad RX beam sweep from a set of broad RX beams. The UE may select a strongest broad TX beam. Here, the strongest broad TX beam is associated with SSBn. The UE may select a strongest broad RX beam. Here, the strongest broad RX beam is generated via the panel directed toward the BS. A RX beam corresponding to the strongest TX beam at the BS and a TX beam corresponding to the strongest RX beam at the UE may be used for UL physical randomaccess channel (PRACH) transmissions between the UE and the BS to connect to the network.

In P2, the UE may signal the strongest broad TX beam to the BS. Alternatively, the UE may signal measurement reports to the BS. The BS may determine the strongest broad TX beam to the BS based on the measurements The BS may perform a narrow TX beam sweep from a set of narrow TX beams. The narrow TX beams may be quasicolocated with the broad TX beam selected by the UE in P1. Each narrow TX beam may be associated with a respective channel state information reference signal (CSI-RS). The UE may perform layer 1 (L1) reference signal received power (RSRP) or reference signal received quality (RSRQ) measurements for the narrow TX beams and may report these measurements to the BS. The BS may select a strongest narrow TX beam. Here, the strongest narrow TX beam is associated with CSI-RS3 (i.e. CSI3 on Figure 5).

In P3 the BS may repeat transmissions of the CSI-RS on the strongest narrow TX beam. Here, the BS may repeat transmissions of CSI-RS3. The UE may perform a narrow RX beam sweep from a set of narrow RX beams. The narrow RX beams may be generated via the panel selected by the UE in P1. The UE may perform L1 RSRP or RSRQ measurements for the narrow RX beams. The UE may select a strongest narrow RX beam. The strongest narrow RX beam may be aligned with the strongest TX beam. The strongest narrow RX beam may or may not be signalled to the BS.

It will be understood that, although in the above the UE needs repetitions of a CSI-RS on the strongest narrow TX beam to select the strongest narrow RX beam aligned with the strongest narrow TX beam, the UE may not necessarily need repetitions of a CSI-RS on the strongest narrow TX beam to select the strongest RX beam aligned with the strongest narrow TX beam.

Whether the UE needs repetitions of a CSI-RS on the strongest narrow TX beam to select the strongest narrow RX beam aligned with the strongest narrow TX beam may depend on various parameters, such as the broad TX beam selected by the target BS in P1, whether the broad TX beam selected by the target BS is bordering a TX beam of a neighboring BS or signal strength of the SSB on the broad TX beam selected by the target BS in P1.

RWS-210499 provides a solution to allow the UE to select the strongest narrow RX beam aligned with the strongest narrow TX beam based on the SSBs associated with the broad TX beams in P1 when channel conditions between the BS and the UE are stationary (i.e. do not vary significantly) between SSB bursts and when filtering is applied. In this way, the UE may not necessarily need repetitions of a CSI-RS on the strongest TX beam to select the strongest narrow RX beam aligned with the strongest narrow TX beam.

Alternatively, the UE may use an artificial intelligence (Al) or machine learning (ML) model to select the strongest RX beam aligned with the strongest TX beam based on previous UE behavior (e.g. which strongest narrow RX beam was previously selected by the UE with a strongest narrow TX beam), UE measurements, UE location, UE orientation or other.

The UE may signal UE capability information to a source BS. In this way, the source BS may know if the UE supports the capability to perform P3 in a beam management procedure. For example, according to section 4.2.7.2 of 3GPP TS 38.306, the UE may signal a maxNumberRxBeam IE. The maxNumberRxBeam IE may define whether the UE supports RX beamforming switching using non-zero power (NZP) CSI-RS resource. The UE may indicate a single value for the preferred number of NZP CSI-RS resource repetitions per CSI-RS resource set.

It should be understood that even, if the UE supports RX beamforming, the UE does not necessarily need repetitions of a CSI-RS to select a narrow RX beam aligned with a narrow TX beam. In other words, the UE does not necessarily needs to perform P3 to select a narrow RX beam aligned with a narrow TX beam. Two different cases may be distinguished.

In a first case, the UE supports RX beamforming and is able to select a narrow RX beam aligned with a narrow TX beam autonomously without performing P3.

In a second case, the UE supports RX beamforming and is not able to select a narrow RX beam aligned with a narrow TX beam autonomously without performing P3. The UE is however able to select a narrow RX beam aligned with a narrow TX beam by performing P3.

It should also be understood that a UE that needs repetitions of a CSI-RS to select a narrow RX beam aligned with a narrow TX beam requires more CSI-RS resources than a UE that does not need repetitions of a CSI-RS to select a narrow RX beam aligned with a narrow TX beam.

In light of the above, the target BS has two options to proceed when performing admission control before handover of the UE from the source BS to the target BS.

According to a first option, the target BS may assume that the UE needs repetitions of a CSI-RS to select a narrow RX beam aligned with a narrow TX beam. The target BS assumes that the UE needs to perform P3 to select a narrow RX beam aligned with a narrow TX beam. The target BS may estimate an amount of resource blocks (RBs) in terms of CSI-RS resources required to allow repetitions of a CSI-RS in P3.

An issue with the first option is that if the target BS assumption is incorrect and the UE does not need repetitions of a CSI-RS to select a narrow RX beam aligned with a narrow TX beam, the amount of CSI-RS resources estimated by the target BS may be over-estimated. This over-estimation may cause the target BS to reject the HO request from the source BS, for example if the load at the target BS is already high.

Another issue with the first option is that the target BS may use CSI-RS resources to allow repetitions of a CSI-RS in P3 even though the UE does not need repetitions of a CSI-RS to select a narrow RX beam aligned with a narrow TX beam. As a result, CSI-RS resources are wasted and DL throughput id e unnecessarily reduced. The CSI-RS resources may be used for PDSCH rather than CSI-RS.

According to a second option, the target BS may assume that the UE does not need repetitions of a CSI-RS to select a narrow RX beam aligned with a narrow TX beam. The target BS may assume that the UE needs to perform P3 to select a narrow RX beam aligned with a narrow TX beam. The target BS may estimate an amount of resource blocks RBs and CSI-RS resources required without P3.

An issue with the second option is that that if the target BS assumption is incorrect and the UE needs repetitions of a CSI-RS to select a narrow RX beam aligned with a narrow TX beam, the amount of CSI-RS resources estimated by the target BS may be under-estimated. This under-estimation may cause the target BS to accept the HO request from the source BS. The UE may fail to select a narrow RX beam aligned with a narrow TX beam. A required QoS may not be achieved (if the UE cannot select a narrow RX beam aligned with a narrow TX beam the received signal power may be 6 dB lower assuming 1x4 antenna array). The UE may lose radio connectivity with the target BS without the use of a narrow RX beam.

Another issue with the second option is that the target BS may not reserve sufficient CSI-RS resources for the repetitions of the CSI-RS even though it is needed. The UE may fail to select a narrow RX beam aligned with a narrow TX beam A random access procedure between the UE and the target BS may fail without the use of a narrow RX beam.

In light of the above, the first option would appear to be preferable over the second option. However, the first option is still not entirely satisfactory.

According to section 9.2.5 of 3GPP TS 38.213, L1 RSRP reporting by a UE on repetitions of a CSI-RS may be configured from a source BS. By comparing a signal level before and after P3 is performed, the source BS can estimate if the UE has successfully performed P3 and if the UE has successfully selected a narrow RX beam aligned with a narrow TX beam. The source BS may infer information on whether the UE can perform P3 in general. However, the source BS may not infer any information on whether the UE can perform P3 with a specific panel that is expected to be used for communicating with the target BS.

According to section 4.2.7.2 of 3GPP TS 38.306, the UE may signal the maxNumberRxBeam IE to the source BS and therefore may signal information as to whether the UE can perform P3 in general. However, the source BS may not infer information on whether the UE can perform P3 with the target BS or if the channel conditions between the UE and the target BS would allow to perform P3 with the target base station.

One or more aspects for this disclosure provides a mechanism to configure the source BS to obtain UE information indicating whether the UE would need repetitions of a CSI-RS transmitted by a target BS to select a narrow RX beam aligned with a narrow TX beam in a beam management procedure with the target BS (after a handover of the UE from the source BS to the target BS). That is, the UE information indicates whether the UE would need to perform P3 to select a narrow RX beam aligned with a narrow TX beam in a beam management procedure with the target BS. It will be understood that the repetitions of the CSI-RS may be transmitted by the target BS on the narrow TX beam.

One or more aspects for this disclosure provides a mechanism to configure a source BS to send the UE information to the target BS.

One or more aspects of this disclosure provide a mechanism to configure the target BS to use the UE information to perform enhanced admission control and therefore to perform enhance handover preparation.

The UE may be a multi-panel UE. Each panel may generate a broad RX beam. Each panel may generate multiple narrow RX beams quasi-collocated with the broad RX beam.

The UE information may indicate that the UE would need repetitions of the CSI-RS transmitted by the target BS to successfully select a narrow RX beam aligned with the narrow TX beam without repetitions of the CSI-RS transmitted by the target BS. The UE information may indicate the number of repetitions of the CSI-RS transmitted by the target BS that the UE needs to successfully select a narrow RX beam aligned with the narrow TX beam without repetitions of the CSI-RS transmitted by the target BS. The UE information may indicate that the UE would not need repetitions of the CSI-RS transmitted by the target BS to successfully select a narrow RX beam aligned with the narrow TX beam without repetitions of the CSI-RS transmitted by the target BS. The UE information may indicate a confidence indicator to successfully select a narrow RX beam aligned with the narrow TX beam without repetitions of the CSI-RS transmitted by the target BS (e.g. the UE may select a RX beam aligned with the narrow TX beam using a periodic SSB burst).

In an implementation, the UE information may be determined by the UE. The UE information may be determined based on an AI/ML model. The AI/ML model may be implemented by the source BS and received from the source BS (i.e. the details of the implementation of the AI/ML model may be known by the source BS but not by the UE). The AI/ML model may be implemented by the UE (i.e. the details of the implementation of the AI/ML model may be known by the UE). Inputs of the AI/ML model may be determined by the UE. An output of the AI/ML model may be provided to the UE. The UE information may be derived from the output of the AI/ML model.

Inputs of the AI/ML model may comprise a location of the UE. Inputs of the AI/ML model may comprise a speed of the UE. Inputs of the AI/ML model may comprise a L1 RSRP or L1 RSRQ measured by the UE for a cell of the target BS.

An output of the AI/ML model may comprise a stationarity (non-dynamicity) of a channel between the UE and the target BS. An output of the AI/ML model may comprise a non-stationarity (i.e. dynamicity) of a channel between the UE and the target BS. An output of the AI/ML model may comprise an indication that the UE would need repetitions of the CSI-RS transmitted by the target BS. An output of the AI/ML model may comprise an indication that the UE would not need repetitions of the CSI-RS transmitted by the target BS.

The source BS may send, to the UE, a UE information inquiry to obtain the UE information. The source BS may receive, from the UE, a response to the UE information inquiry comprising the UE information.

In another implementation, the UE information may be determined by the source BS. The UE information may be determined based on an AI/ML model. The AI/ML model may be implemented by the source BS (i.e. the details of the implementation of the AI/ML model may be known by the source BS but not by the UE). Inputs of the AI/ML mode may be determined by the UE and received from the UE or may be determined by the source BS. An output of the AI/ML model may be provided to the UE. The UE information may be derived from the output of the AI/ML model.

Inputs of the AI/ML model may comprise a location of the UE. Inputs of the AI/ML model may comprise a speed of the UE. Inputs of the AI/ML model may comprise a L1 RSRP or L1 RSRQ measured by the UE for a cell of the target BS. Inputs of the AI/ML model may comprise a L1-RSRP or L1-RSRQ measured by the source BS measured by the source BS for a cell of a neighbouring BS, in particular the target BS.

An output of the AI/ML model may comprise a stationarity (non-dynamicity) of a channel between the UE and the target BS. An output of the AI/ML model may comprise a non-stationarity (i.e. dynamicity) of a channel between the UE and the target BS. An output of the AI/ML model may comprise an indication that the UE would need repetitions of the CSI-RS transmitted by the target BS. An output of the AI/ML model may comprise an indication that the UE would not need repetitions of the CSI-RS transmitted by the target BS.

Additionally or alternatively, the UE information may be determined by the source BS based on whether the UE needed repetitions of a CSI-RS by the source BS to select a narrow RX beam aligned with a narrow TX beam in a previous beam management procedure with the source BS.

When L1 RSRP or L1 RSRQ measurements received from the UE after the UE attempts to select a narrow RX beam aligned with a narrow TX beam without repetitions of the CSI-RS transmitted by the source BS increase, the UE may not need repetitions of a CSI-RS transmitted by the source BS to select a narrow RX beam aligned with a narrow TX beam.

As a result, the UE may not need repetitions of a CSI-RS transmitted by the target BS to select a narrow RX beam aligned with a narrow TX beam in a subsequent beam management procedure with the target BS (assuming that the panel selected by the UE to communicate with the source BS and the panel selected by the UE to communicate with the target BS are the same)].

The UE information may sent to the target BS in a HO request message. The UE information may be conveyed in a UE context, in particular in a UECapabilitylnformation IE.

The target BS may use the UE information to perform admission control and make a HO decision. Making a HO decision may comprise allowing HO from the source BS to the target BS for all PDUs. Making a HO decision may comprise rejecting HO from the source BS to the target BS for all PDUs. Making a HO decision may comprise allowing HO from the source BS to the target BS for at least one PDU and rejecting HO from the source BS to the target BS for at least one other PDU.

Additionally or alternatively, the target BS may use the UE information to determine the timing of the repetitions of the CSI-RS transmitted by the target BS in P3.

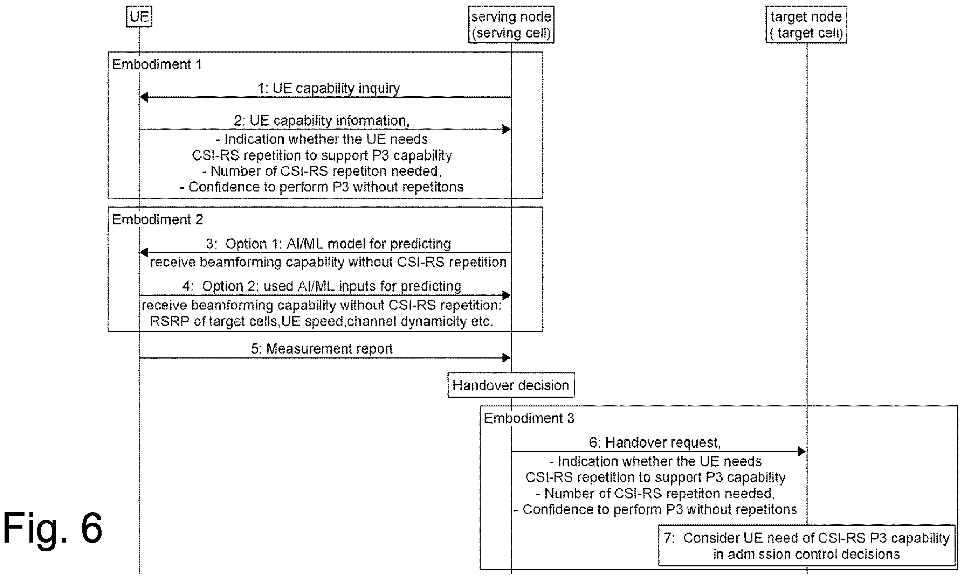

Figure 6 shows a signaling diagram of a process for performing a HO of a UE from a source BS to a target BS.

In an embodiment, in step 1, the source BS may send a UE information inquiry (UE capability inquiry on Figure 6) to the UE. In step 2, the UE may determine UE information. The source BS may receive a response to the UE information inquiry from the UE comprising the UE information.

In another embodiment, in step 3, the source BS may send an AI/ML model to the UE. The UE may determine UE information based on the AI/ML model. The source BS may receive the UE information from the UE. Alternatively, in step 4, the source BS may receive inputs of the AI/ML model from the UE. The source BS may determine UE information based on the inputs of the AI/ML model.

In step 5, the source BS may receive a measurement report from the UE. The reception of the measurement report may be triggered by a triggering event at the UE. The triggering event may be an A3 event (i.e. cell of the target BS becomes greater than cell of the source BS by an offset). The measurement report may comprise information indication that a HO of the UE from the source BS to the target BS may be needed. The source BS may determine that a HO of the UE from the source BS to the target BS may be needed based thereon.

Additionally, the measurement report may comprise updated UE information or updated inputs of the AI/ML model to determine updated UE information. This may be useful in a dynamic environment where radio conditions between the UE and the target BS vary rapidly.

Alternatively, the updated UE information or updated inputs of the AI/ML model to determine updated UE information may be sent to the target BS via other signaling.

In step 6, the source BS may send a HO request to the target BS. The HO may comprise the UE information.

In step 7, the target BS may use the UE information to perform admission control and make a HO decision.

The admission control may consider whether a HO of the UE form the source BS to the target BS would be successful and whether a required QoS would be fulfilled if the UE would select a narrow RX beam aligned with a narrow TX beam without performing P3 in a beam management procedure with the target BS.

The admission control may consider whether a HO of the UE from the source BS to the target BS would be successful and whether a required QoS would be fulfilled if the UE would select a narrow RX beam aligned with a narrow TX beam by performing P3 using available RBs in terms of CSI-RS resources.

The admission control may consider whether the RBs cost to the target BS to provide repetitions of the CSI-RS on the narrow TX beam to allow the UE to select a narrow RX beam aligned with a narrow TX beam by performing P3 would be acceptable. That is, the admission control may consider whether the RBs cost to the target BS to serve the UE by performing P3 would be acceptable.

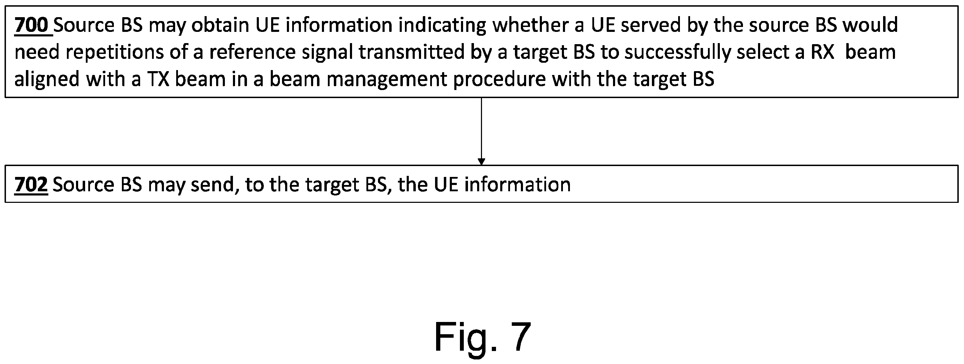

Figure 7 shows a block diagram of a method for performing a HO of a UE from a source BS to a target BS in a communication system. The method may be performed by the source BS.

In step 700, the source BS may obtain UE information indicating whether a UE served by the source BS would need repetitions of a reference signal transmitted by a target BS to successfully select a RX beam aligned with a TX beam in a beam management procedure with the target BS.

In step 702, the source BS may send, to the target BS, the UE information.

The reference signal may be a CSI-RS.

The TX beam may be a narrow TX beam and may be quasi-collocated with a broad TX beam selected by the target BS in a first phase of the beam management procedure after the UE is handed over from the source BS to the target BS.

The TX beam may be selected by the target BS in a second phase of the beam management procedure after the UE is handed over from the source BS to the target BS.

The RX beam may be selected by the UE in a third phase of the beam management procedure after the UE is handed over from the source BS to the target BS.

The RX beam may be generated by the equipment via a panel selected by the UE in the first phase of the beam management procedure after the UE is handed over from the source BS to the target BS.

The repetitions of the reference signal may be transmitted by the target BS on the TX beam.

The UE information may indicate at least one of: the UE would need repetitions of the reference signal transmitted by the target BS to successfully select a RX beam aligned with the TX beam; the number of repetitions of the reference signal transmitted by the target BS that the UE needs to successfully select a RX beam aligned with the TX beam; the UE would not need repetitions of the reference signal transmitted by the target BS to successfully select a RX beam aligned with the TX beam; or a confidence indicator to successfully select a RX beam aligned with the TX beam without repetitions of the reference signal transmitted by the target BS.

The UE information may be determined by the UE. The source BS may send, to the UE, a UE information inquiry to obtain the UE information. The source BS may receive, from the UE, a response to the UE information inquiry comprising the user equipment information.

The UE information may be determined by the UE based on a model received from the source BS. Inputs of the model may be determined by the UE.

The UE information may be determined by the source BS. The UE information may be determined by the source BS based on a model. Inputs of the model may be determined by the source BS. Inputs of the model may be received from UE.

Inputs of the model may comprise at least one of: a location of the UE; a speed of the UE; a RSRP or RSRQ measured by the UE for a cell of the target BS; a RSRP or RSRQ measured by the source BS for a cell of the target BS.

An output of the model may comprise at least one of: a stationarity of a channel between the UE and the target BS; a non-stationarity of a channel between the UE and the target BS; an indication that the UE would need repetitions of the reference signal transmitted by the target BS; the number of repetitions of the reference signal transmitted by the target BS; a confidence indicator to successfully select a RX beam aligned with the TX beam without repetitions of the reference signal transmitted by the target BS; or an indication that the UE would not need repetitions of the reference signal transmitted by the target BS.

The UE information may be sent to the target BS in a HO request message.

The UE information may be conveyed in a UE context. The UE information may be conveyed in a UE capability IE.

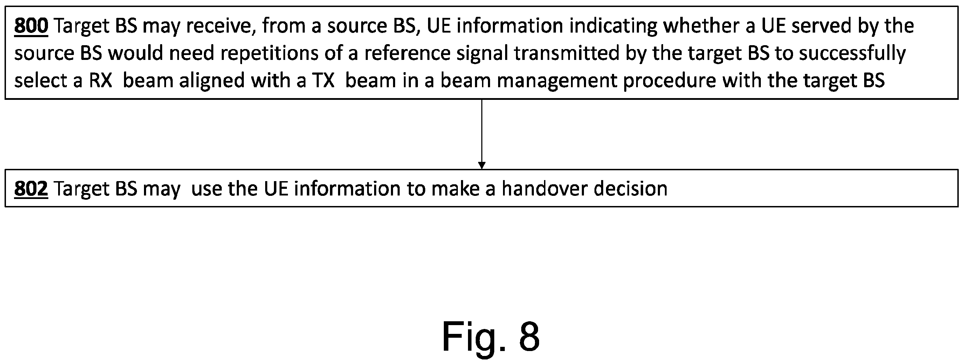

Figure 8 shows a block diagram of a method for performing a HO of a UE from a source BS to a target BS in a communication system. The method may be performed by the target BS.

In step 800, the target BS may receive, from a source BS, UE information indicating whether a UE served by the source BS would need repetitions of a reference signal transmitted by the target BS to successfully select a RX beam aligned with a TX beam in a beam management procedure with the target BS.

In step 802, the target BS may use the UE information to make a HO decision.

Making a HO decision may comprise at least one of: allowing HO from the source BS to the target BS for all PDU sessions; rejecting HO from the source BS to the target BS for all PDUs; calculating an overhead incurred by the repetitions of the reference signal transmitted by the target BS to the resource usage of the target BS; or accepting HO from the source BS to the target BS for at least one PDU session and rejecting HO from the source BS to the target BS for at least one other PDU session.

The target BS may the UE information to determine the timing of the repetitions of the reference signal transmitted by the target BS on the TX beam.

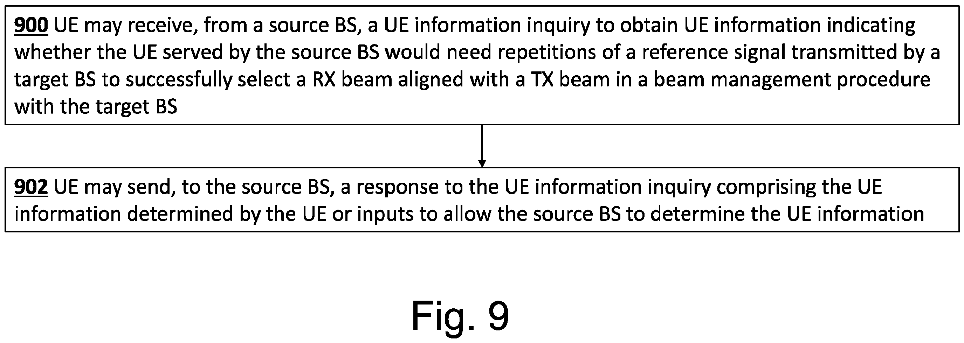

Figure 9 shows a block diagram of a method for performing a HO of a UE from a source BS to a target BS in a communication system. The method may be performed by the UE.

In step 900, the UE may receive, from a source BS, a UE information inquiry to obtain UE information indicating whether the UE served by the source BS would need repetitions of a reference signal transmitted by a target BS to successfully select a RX beam aligned with a TX beam in a beam management procedure with the target BS.

In step 902, the UE may send, to the source BS, a response to the UE information inquiry comprising the UE information determined by the UE or inputs to allow the source BS to determine the UE information.

The UE may send, to the source BS, a measurement report comprising updated UE information determined by the UE or updated inputs to allow the source BS to determine updated UE information.

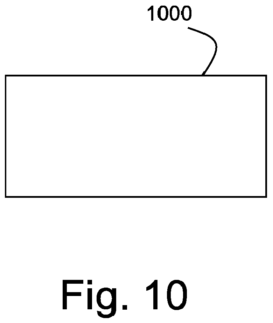

Figure 10 shows a schematic representation of non-volatile memory media storing instructions and/or parameters which when executed by a processor allow the processor to perform one or more of the steps of the methods of any of Figures 7 to 9.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 7 to 9, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising at least one processor and at least one memory including computer code for one or more programs, the at least one memory and the computer code configured, with the at least one processor, to cause the apparatus at least to:
obtain user equipment information indicating whether a user equipment served by the apparatus would need repetitions of a reference signal transmitted by a target base station to successfully select a receiving beam aligned with a transmitting beam in a beam management procedure with the target base station; and
send, to the target base station, the user equipment information.

2. The apparatus of claim 1, wherein the user equipment information indicates at least one of:
the user equipment would need repetitions of the reference signal transmitted by the target base station to successfully select a receiving beam aligned with the transmitting beam;
the number of repetitions of the reference signal transmitted by the target base station that the user equipment needs to successfully select a receiving beam aligned with the transmitting beam;
the user equipment would not need repetitions of the reference signal transmitted by the target base station to successfully select a receiving beam aligned with the transmitting beam; or
a confidence indicator to successfully select a receiving beam aligned with the transmitting beam without repetitions of the reference signal transmitted by the target base station.

3. The apparatus of claim 1 or claim 2, wherein the user equipment information is determined by the user equipment; and
wherein the at least one memory and the computer code are configured, with the at least one processor, to cause the apparatus at least to:
send, to the user equipment, a user equipment information inquiry to obtain the user equipment information; and
receive, from the user equipment, a response to the user equipment information inquiry comprising the user equipment information.

4. The apparatus of claim 3, wherein the user equipment information is determined by the user equipment based on a model received from the apparatus.

5. The apparatus of claim 4, wherein inputs of the model are determined by the user equipment.

6. The apparatus of claim 1 or claim 2, wherein the user equipment information is determined by the apparatus.

7. The apparatus of claim 6, wherein the user equipment information is determined by the apparatus based on a model.

8. The apparatus of claim 7, wherein inputs of the model are determined by the apparatus;
wherein inputs of the model are received from the user equipment.

9. The apparatus of claim 5 or claim 8, wherein inputs of the model comprise at least one of:
a location of the user equipment;
a speed of the user equipment;
a reference signal received power or reference signal received quality measured by the user equipment for a cell of the target base station;
a reference signal received power or reference signal received quality measured by the source base station for a cell of the target base station.

10. The apparatus of claim 5 or claim 8, wherein an output of the model comprises at least one of:
a stationarity of a channel between the user equipment and the target base station;
a non-stationarity of a channel between the user equipment and the target base station;
an indication that the user equipment would need repetitions of the reference signal transmitted by the target base station;
the number of repetitions of the reference signal transmitted by the target base station;
a confidence indicator to successfully select a receiving beam aligned with the transmitting beam without repetitions of the reference signal transmitted by the target base station; oran indication that the user equipment would not need repetitions of the reference signal transmitted by the target base station.

11. The apparatus of any of claims 1 to 10, wherein the user equipment information is sent to the target base station in a handover request message.

12. An apparatus comprising at least one processor and at least one memory including computer code for one or more programs, the at least one memory and the computer code configured, with the at least one processor, to cause the apparatus at least to:
receive, from a source base station, user equipment information indicating whether a user equipment served by the source base station would need repetitions of a reference signal transmitted by the apparatus to successfully select a receiving beam aligned with a transmitting beam in a beam management procedure with the apparatus; and
use the user equipment information to make a handover decision.

13. The apparatus of claim 12, wherein making a handover decision comprises at least one of:
allowing handover from the source base station to the apparatus for all protocol data unit sessions;
rejecting handover from the source base station to the apparatus for all protocol data unit sessions;
calculating an overhead incurred by the repetitions of the reference signal transmitted by the apparatus to the resource usage of the apparatus; or
accepting handover from the source base station to the apparatus for at least one protocol data unit session and rejecting handover from the source base station to the apparatus for at least one other protocol data unit session.

14. The apparatus of claim 13, wherein the at least one memory and the computer code are configured, with the at least one processor, to cause the apparatus at least to:
use the user equipment information to determine the timing of the repetitions of the reference signal transmitted by the apparatus on the transmitting beam.

15. An apparatus comprising at least one processor and at least one memory including computer code for one or more programs, the at least one memory and the computer code configured, with the at least one processor, to cause the apparatus at least to:
receive, from a source base station, a user equipment information inquiry to obtain user equipment information indicating whether the apparatus served by the source base station would need repetitions of a reference signal transmitted by a target base station to successfully select a receiving beam aligned with a transmitting beam in a beam management procedure with the target base station; and
send, to the source base station, a response to the user equipment information inquiry comprising the user equipment information determined by the user equipment or inputs to allow the source base station to determine the user equipment information.
